# EUROPEAN PATENT SPECIFICATION

(11) **EP 2 913 220 B1**
(45) Date of publication and mention of the grant of the patent: **27.03.2019**
(21) Application number: 14157277.6
(22) Date of filing: 28.02.2014
(51) Int. Cl.: B60N 2/02, B60N 2/16, B60N 2/28

(54) **Adjustable child seat**
Verstellbarer Kindersitz
Siège d'enfant réglable

(43) Date of publication of application: 02.09.2015
(73) Proprietor: Volvo Car Corporation, 40531 Göteborg (SE)
(72) Inventor: Liedberg, Lennart, 44298 Kode (SE)
(74) Representative: Valea AB

(56) References cited:
- DE-A1- 10 127 569
- DE-A1-102004 033 308
- DE-B3-102004 048 931
- US-A1- 2010 176 635

## Description

### Technical field

The present invention relates generally to adjustable child seats for vehicles.

### Background art

In prior art document CN101780777B, it is known to use adjustment mechanisms in automobile children safety seat cushions wherein the height as well as the length of the child seat may be adjusted. Multiple sections of additional seat cushions can be connected or separated from each other at the front side of the seat cushion of the seat so that the length of the seat cushion can be adjusted according to the body size of the children using the seat. The height of the seat is adjustable as well. Prior art document DE102004048931 B3 discloses a vehicle seat with an integrated child seat. The vehicle seat comprises a seat area comprising at least two seat cushions forming part of a connecting rod transmission, movable between an adult and child position. Prior art document DE10127569 A1 discloses a vehicle seat with an integrated child seat. A seat portion is divided into a rear seat portion and a front seat portion. The front seat portion is rotatable at a rear seat portion around a hinge axis and the rear seat portion is height adjustable. Prior art document DE102004033308 A1 discloses a vehicle seat with an integrated child seat. The seat comprises an adjustment device by which a seating portion is allowed to move between a lower rest position and an upper use position. Prior art document US2010/0176635 A1 discloses a portable, collapsible child booster seat for a vehicle, comprising a collapsible seat member including an upper seating surface supported on a collapsible scissors frame base. The seat base is raisable to a deployed position and collapsible to a storage position.

A drawback with the known art is that several manual steps are required for adjusting the height of the seat and length of the seat respectively. Another drawback is that loose parts connectable to the cushion, such as the multiple sections, may be lost over time and therefore not being available when needed to optimize the safety for a child using the seat. Another drawback is that sections not properly connected may become a hazard during a crash situation. Yet another drawback is that play in the connection between the connected portions may increase over time causing an unappealing and uncomfortable feel for the occupant.

### Summary of invention

An object of the present invention is to create a child seat which is simpler, more convenient and faster to adjust in a height and lengthwise direction.

Another object is to create a child seat which is safer to use for the occupants in a vehicle.

According to the present invention an adjustable child seat is provided comprising a seat support portion adjustable between at least a first position and a second position, the seat support portion comprising a first seating surface, wherein the adjustable child seat further comprising at least a first lamella comprising a second seating surface, wherein the first lamella is pivotally connected to the seat support portion, wherein the first lamella is adapted to be in a first position whereby the seat support portion is in a first height position, wherein the second seating surface is essentially non-parallel to the first seating surface, wherein the first lamella is adapted to be pivoted to a second position wherein the seat support portion is in a second height position, wherein the second seating surface is essentially parallel to the first seating surface, wherein the seat support portion is adjustable between the first position, the second position and a third position, the adjustable child seat further comprising a second lamella comprising a third seating surface, wherein the second lamella is pivotally arranged to the first lamella, wherein the second lamella is adapted to be in a first position whereby the seat support portion is in the second position, and the third seating surface is essentially non-parallel to the first and second seating surfaces, and wherein the second lamella is adapted to be pivoted to a second position wherein the seat support portion is in a third height position, wherein the third seating surface is essentially parallel to the first and second seat surfaces.

As an option, the adjustable child seat further comprises a base portion, wherein the second lamella is pivotally connected to the base portion.

As an option, the second and third seating area are essentially perpendicular to the first seating area when the first and second lamella is in a respective first position.

As an option, a link device is pivotally arranged between the seat support portion and the first lamella and/or the first lamella and the second lamella respectively to form the respective pivotal connection.

As an option, the adjustable child seat comprises an adjustable first side support and an adjustable second side support connected on a respective side of the seat support portion, wherein the position of the first and second side support portions is based on the position of the seat support portion.

As an option, the first and second side support are pivotally connected to the seat support portion, wherein a control bracket is pivotally arranged in the seat support portion and adapted to rest with a cam-surface of a respective side portion on a respective plate which is connected to the side support, and wherein a bottom portion of the control bracket is adapted to slide against a rail of the base portion, wherein adjusting the position of the seat support portion causes pivoting of the control bracket, whereby the rotation of the cam surface causes a rotation of the first and second side support.

As an option, the first lamella has a tapered cross-section in a direction from the second seating surface towards its opposite side.

As an option, the adjustable child seat further comprises a base portion wherein a support structure is provided for supporting the seat support portion at least in the first and second positions of the seat support portion, wherein the support structure is pivotally arranged to the seat support portion at a portion of the support structure, wherein the support structure is slidably arranged to the base portion at two respective portions of the support structure, wherein the support structure pivots during movement of the seat support portion between the first, second and third positions of said seat support portion.

As an option, the first position is a vertically uppermost height position and the third position is a vertically lowermost height position, and the second position is a vertically intermediate height position between the first and third positions.

As an option, the first position corresponds to a hindmost position of the seat support portion in a horizontal direction of the vehicle, and the third position corresponds to a foremost position of the seat support portion and the second height position corresponds to an intermediate position between the first and third positions.

As an option, the first position corresponds to the smallest total seating surface area, and the third position corresponds to the largest total seating surface area and the second height position corresponds to an intermediate total seating surface area.

As an option, the adjustable child seat is adapted to be connected to a seat of a vehicle using an isofix connection.

Also a vehicle is provided comprising an adjustable child seat described above.

### Brief description of drawings

The invention is now described, by way of example, with reference to the accompanying drawings, in which:
Fig. 1 shows a perspective view of a first and second adjustable child seat according to the invention, arranged in a vehicle.
Fig. 2 shows a perspective view of the adjustable child seat according to Fig. 1.
Fig. 3a-3c show a side view of the adjustable child seat according to Fig. 1 carried out in a simplified manner for explanatory purposes.

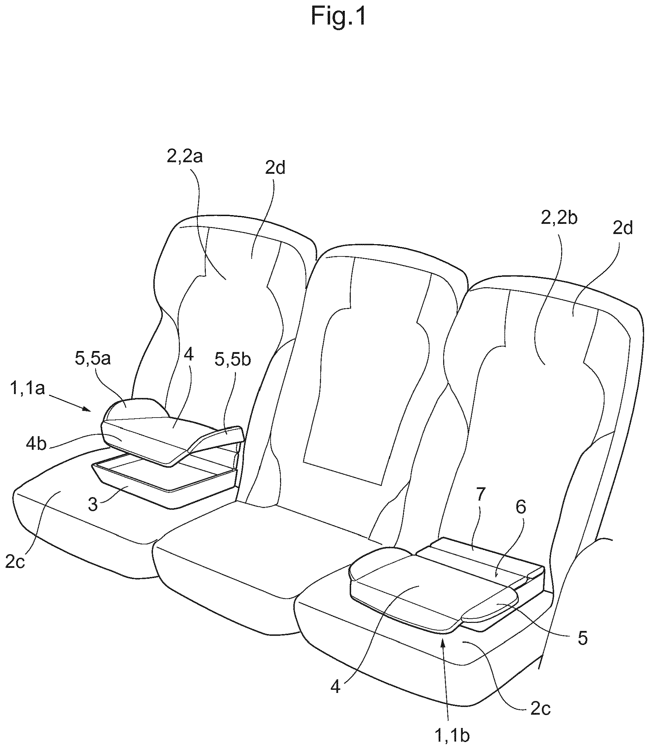

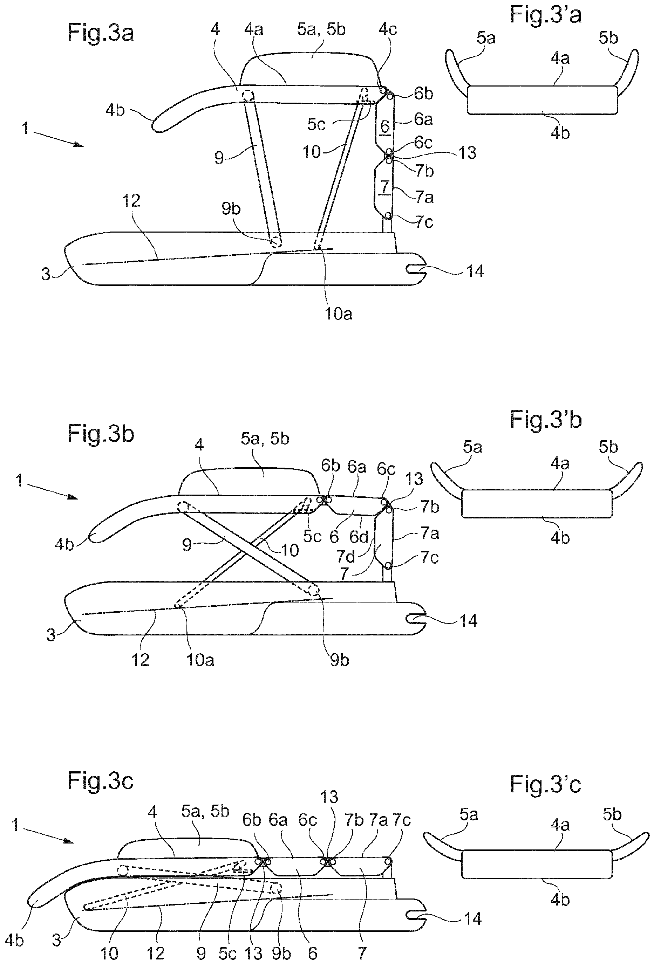

Fig. 3a'-3c' show a view of the adjustable child seat from a front direction corresponding to the respective Fig. 3a-3c, according to Fig. 1.

### Detailed Description

In the following, a detailed description of the invention will be given. In the drawing figures, like reference numerals designate identical or corresponding elements throughout the several figures. It will be appreciated that these figures are for illustration only and are not in any way restricting the scope of the invention. In the following the use of for-aft, front-back, foremost-hindmost, forward- backward relationships used for the adjustable child seat 1 refer to the relative positions in view of the vehicle in which the adjustable child seat can be arranged, but is defined for the adjustable child seat 1 itself.

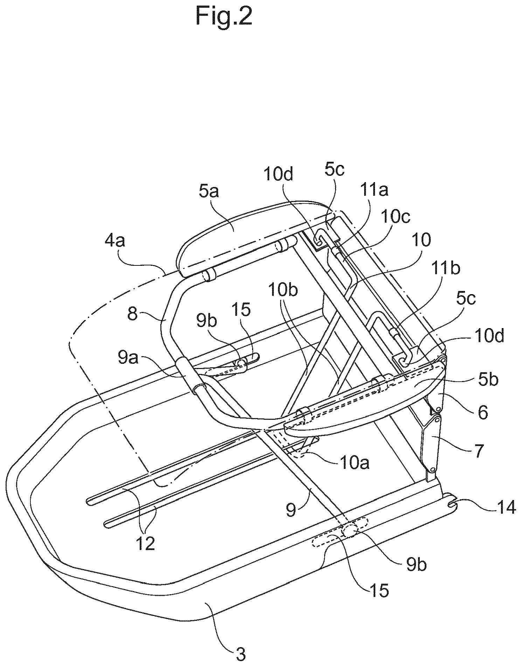

Fig.1 shows a perspective view of a first adjustable child seat 1, 1a, according to the invention, which is arranged in a car seat 2, 2a, in the rear seat of a vehicle. Some interior parts of the child seat 1 have been excluded in Fig. 1 but will be shown and described under Fig. 2. Optionally, the adjustable child seat 1 is a child booster seat. The first adjustable child seat 1a is shown wherein the seat support portion 4 is in a first, uppermost, height position. Fig. 1 further shows a second adjustable child seat 1b according to the invention, arranged in a car seat 2, 2b in the rear seat of a vehicle. The second adjustable child seat 1b is shown in a third, lowermost, height position. The car seats 2a, 2b, comprise a seat portion 2c and a backrest portion 2d respectively. Optionally, the first and second adjustable child seats 1a, 1b are arranged in the seat portions 2c, wherein a base portion 3 is placed onto the seat portions 2c and fixed to the seat using a for instance an isofix connection 14. The adjustable child seat 1 further comprises a seat support portion 4 which may be adjusted in height and in length in relation to the base portion 3. A foremost portion 4b of the seat support portion 4, i.e. a first end 4b of the seat support portion 4 has a downward inclination to provide support for an area approximately corresponding to the hollow of the knee of an occupant of the adjustable child seat 1. A first side support 5, 5a is arranged on one side of the adjustable child seat 1, and a second side support 5, 5b is arranged on the opposite side of the adjustable child seat 1. The first and second side supports are adjustable, from a relatively horizontal position to a relatively vertical position to further enhance the comfort and safety of an occupant.

Fig. 2 shows a perspective view of the adjustable child seat 1 wherein a first seating surface 4a of the seat support portion 4 has been made transparent and with boundaries corresponding to the dotted line in order to expose certain parts of the adjustable child seat 1 to be further described below. A foremost or front-position of the adjustable child 1 seat refer to the left end of the bottom portion 3 as seen in Fig. 2 comprising a slightly tapered end, whereas the portion comprising vertically extending lamellas 6, 7 further described refer to a hindmost or back-portion of the adjustable child seat 1. The adjustable child seat 1 is seen in a first, uppermost height position. Below the first seating surface 4a is a frame structure 8 to support the seat support portion 4. A support structure 9 is pivotally connected to the frame 8 at a portion 9a. Optionally, the support structure 9 is Y-shaped, i.e. comprising two arms joined in one end at portion 9a and separated from each other in their other ends at respective portions 9b. By arranging the pivotal connection point 9a at a central position of the frame structure 8 the structure requires less space, i.e. can be made more compact, when arranged inside a vehicle in addition to the beneficial effect of reducing the risk of pinching a human finger or hand by placing the pivotal point as far away from the sides of the adjustable child seat 1 as possible. Stability and further support of the adjustable child seat 1 is maintained by the lamellas 6, 7 further described in this description. The portions 9b are slidingly arranged in the base portion 3, to slide in a for-aft direction along a slide or locking rail 15 in the base portion 3, in a releasably lockable manner. Optionally, the locking is achieved by using a ratchet relationship between the portions 9b and the slide 15 of the base portion 3, i.e. by a ratchet device. As an option, a release device is used for selectively release the lock between the portions 9b and the slide 15.

A control bracket 10 is pivotally connected to the seat support portion 4 at positions 11a, 11b. Optionally, the control bracket 10 is essentially T-shaped. The control bracket 10 may be created by bending a frame structure 10 so that a central bottom portion 10a is formed from which the frame structure is bent, e.g. in a 90° bend, at both sides of the bottom portion 10a, wherein the frame structure 10 extends in two parallel portions 10b at a length 5-10 times the length of the bottom portion 10a, whereafter each respective parallel portions are bent again at a 90° bend into side portions 10c into a direction parallel to the bottom portion 10a. The side portions 10c extend at a length 1-3 times the length of the bottom portion 10a whereafter they bend in yet another 90° bend initially into a direction essentially parallel to the parallel portions 10b. As an option, said bend has an angle of 0-45° compared to the parallel portions 10b. As an option, the frame structure terminates after yet another bend in a direction parallel to the base portion 10a. Optionally, the frame structure 10 terminates in a round bend 10d forming a round cam-surface 10d.

A portion of the frame structure 10/control bracket 10, that is defined to rest on a respective plate 5c rigidly connected to each of the respective side support 5a, 5b, during rest or during rotation of the control bracket 10, may be defined as a cam surface 10d in that its translates a rotational movement of the control bracket 10 to the plate 5c. For instance, the round bend 10d rests on a respective plate 5c rigidly connected to each of the respective side support 5a, 5b and is a cam surface 10d. Optionally, the respective plates 5c are connected to the side supports 5a, 5b at an angle. The side supports 5a, 5b are pivotally connected to the frame structure 8. As an option, the side supports are biased to move towards the essentially horizontal position by the aid of a respective spring device (not shown). Optionally, the bottom portion 10a of the control bracket 10 is adapted to slide against a slide or locking rail 12 or slide of the base portion 3 comprising a ratchet function or device to releasably lock the control bracket 10 to the base portion 3 at its bottom portion 10a. Optionally, the locking rail 12 or slide extends in a for-aft direction of the adjustable child seat 1. As the position of the seat support portion 4 is changed, the control bracket 9 will be pivoted causing the rotation of the cam surface 10d resting on the plate 5c, further causing the transfer of movement from the rotation of the control bracket 10, via the cam surface 10d to the plate 5c by applying a pressure thereto, thus causing the rotation of the first and second side supports 5a, 5b. As an option, a release device is used for selectively release the lock between the portion 10a and the slide or locking rail 12. As an option, the release device may be an extension rod connected to the bottom portion 10a and extending in the for-aft direction of the base portion 3 to protrude through a hole in the front portion of the base portion 3 (not shown) which can be operated by a person aiming to adjust the position of the child seat 1 by for instance pulling or pushing the extension rod. As an option, the same release device for releasing the lock between the portions 9b and the slide or locking rail 15 is used for releasing the lock between the portion 10a and the slide or locking rail 12.

Figs. 3a-3c show a side view of the adjustable child seat 1 carried out in a simplified manner for explanatory purposes concerning the function and parts of the adjustable child seat 1. Figs. 3a-3c show the adjustable child 1 seat in three different separate positions. The adjustable child seat 1 comprises a seat support portion 4. The seat support portion 4 comprises a first seating surface 4a. Figs. 3a'-3c' show a view of the adjustable child seat 1 from a front direction corresponding to the respective Fig. 3a-3c to indicate the corresponding position of the side supports 5a, 5b for each position. The adjustable child seat 1 further comprises at least a first lamella 6 comprising a second seating surface 6a, wherein the first lamella 6 is pivotally connected to the seat support portion 4. Optionally, a first end portion 6b of the first lamella 6 is pivotally connected to a second end portion 4c of the seat support portion 4. Optionally, the second end portion 6c of the lamella 6 is pivotally connected to the base portion 3 or another portion of the adjustable child seat 1. Optionally, the second end portion 6c of the lamella 6 is pivotally connected to a first end portion 7b of a second lamella 7, wherein the second lamella 7 comprises a third seating surface 7a. Optionally, a second end portion 7c of the second lamella 7 is pivotally connected to the base portion 3 or another portion of the adjustable child seat 1. Optionally, the lamellas 6, 7 are made of extruded plastic. As an option, the 6, 7 the seat support portion 4, and the base portion 3 are made of a lightweight plastic material.

Optionally, the pivotal connections described above are carried out by holes arranged in the end portions 6b, 6c, 7b, 7c of the lamellas 6, 7 and one end of the seat support portion 4c as well as the base portion 3 wherein pivot shafts (not shown) are arranged. A link device 13 such as e.g. a plate 13 or is pivotally arranged to two respective pivot shafts between each of the pivotally connected end portions 4c, 6b, 6c, 7b, 7c to form the actual pivotal connection. Hence, the end portions 4c, 6b, 6c, 7b, 7c and possibly the base portion 3 are pivotally connected to each other via an intermediate respective link device 13 in a chain link manner. As an option, the respective link device 13 has a length similar to the length of the lamellas 6, 7. As an option, the link device 13 may be metallic plates such as steel plates. As an option, the link device 13 may be of a plastic material. As an option, the link device 13 may be a so-called living hinge.

Fig. 3a shows the adjustable child seat 1 in a first position, wherein the seat support portion 4 is in a first height position. Optionally, the first position is an uppermost height position of the seat support portion 4. Optionally, the seating surface 4a extends essentially in the horizontal plane. In the first height position of the seat support portion 4, the lamella 6 is adapted to be in a first position, wherein the second seating surface 6a is essentially non-parallel to the first seating surface 4a. Essentially non-parallel is herein defined as essentially perpendicular to the first seating surface 4a. The support portion 9 is pivoted so that its portions 9b are slid to its foremost position and locked. The seat support portion 4 now rests on the support portion 9 and the lamellas 6, 7. The control bracket 10 is pivoted so that its bottom portion 10a is at its most backward position and locked. The round bend 10d or cam surface 10d has pressed against the respective plates 5c which has caused the side supports 5a, 5b to pivot to a position corresponding to Fig. 3a', i.e. their most vertical position.

Fig. 3b shows the adjustable child seat 1 in a second position, wherein the seat support portion 4 is in a second height position. The two lamellas 6, 7 are connected to each other and the first lamella 6 is connected to the seat support portion 4, wherein the second position is an intermediate height position of the seat support portion 4. In the second height position of the seat support portion 4, the first lamella 6 is in a second position, for instance after being pivoted from the first position according to Fig. 1, to the second position, wherein the second seating surface 6a is essentially parallel to the first seating surface 4a. In the same second height position, the second lamella 7 is in a first position, whereby the third seating surface 7a is essentially non-parallel to the first and second seating surfaces 4a, 6a. Essentially non-parallel is herein defined as essentially perpendicular to the first seating surface 4a.The support portion 9 is pivoted so that its portions 9b are slid to an intermediate position and locked. The seat support portion 4 continues to rests on the support portion and the lamellas 6, 7. The control bracket 10 is pivoted so that its bottom portion 10a is at an intermediate position and locked. The pressure of the round bend 10d against the respective plates 5c has been slightly reduced compared to the position of Fig. 3a which has caused the side supports 5a, 5b to pivot around to a position corresponding to Fig. 3b', i.e. an intermediate position less vertical than in Fig. 3a'.

Fig. 3c shows the adjustable child seat in a third position, wherein the seat support portion 4 is in a third height position. Optionally, the third position is a lowermost height position of the seat support portion 4. In the third height position of the seat support portion 4, the first and second lamellas 6 is adapted to be in a second position respectively, wherein the second seating surface 6a and the third seating surface 7a are essentially parallel to the first seating surface 4a. The support portion 9 is pivoted so that its portions 9b are slid to a most backward position and locked. Optionally, the support portion 9 is instead slid in a forward direction when the seat support portion 4 moves from a second to a third position. Optionally, the seat support portion 4 continues to rests on the support portion and the lamellas 6, 7. Optionally, the seat support portion 4 rests on the base portion 3. The control bracket 10 is pivoted so that its bottom portion 10a is at its foremost position and locked. The pressure of the round bend 10d against the respective plates 5c has been further slightly reduced compared to the position of Fig. 3b which has caused the side supports 5a, 5b to pivot around to a position corresponding to Fig. 3c', i.e. their most horizontal position.

As can be further noted from Fig. 3a-3c is that the total seatable area available to an occupant of the adjustable child seat 1 made up of the first, second and third seating surfaces 4a, 6a, 7a changes between the positions of the adjustable child seat 1 and seat support portion 4. Hence, when each of the respective second and third seating surfaces 6a, 7a is essentially parallel to the seat support portion 4, i.e. extending in an essentially horizontal plane, they add to the total seatable area, i.e. total seating surface area, as well as the total length of the adjustable child seat 1. The adjustment of the total seating surface area is thus increased/reduced by the area of the lamella 6, 7 and the total length is thus increased/reduced by the length of the lamella 6, 7. Thus, the total seating surface area is automatically adjustable and is based on the height position of the adjustable child seat 1 and seat support portion 4. In a similar, analogous, manner the position of the side support 5a, 5bs is automatically adjustable and is based on the height position of the adjustable child seat 1 and seat support portion 4. The shorter the occupant using the adjustable child seat 1, the higher position of the seat support portion 4 is required and the smaller total seatable area/smaller total seating surface area and shorter length of the adjustable child seat 1 is required as well as a more vertical and supportive position of the side supports 5a, 5b. This enables the automatic adjustment into a safe position of the adjustable child seat 1 depending on the size of the occupant/child using the adjustable child seat 1.

It should be noted that other embodiments, comprising more than two lamellas 6, 7 are possible.

As an option, the lengths and widths may be different between the first and second lamellas 6, 7.

As an option, it is possible to directly move to any position from any given start position.

As an option, the second seating surface 6a and third seating surface 7a is respectively larger than their respective opposite sides 6d and 7d respectively. This means that the second and third lamellas 6, 7 respectively has a tapered cross-sectional shape in order to allow the relative pivotal movement of the lamellas and the seat support portion 4. As an option, the second end 4b of the seat support surface has a tapered shape in a similar manner, and for the same reason as described. As an option, the tapered angle may be 0-60°, preferably 45°. This can be seen for instance in Fig. 3a-3c.

As an option, a normal direction of the second seating surface 6a of the first lamella 6 is extending at a first angle α1 in relation to normal direction of the seat support portion 4 in the first position of the lamella 6 and at a second angle α2 in relation to the normal direction of the seat support 4 in the second position of the lamella 6, wherein α1 ≥ α2. As an option, α1=90° and α2=0°, i.e. the first lamella 6 extends essentially vertically compared to the horizontal seat support portion 4 in the first position of the lamella 6 and wherein the first lamella extends essentially horizontally in the second position of the lamella 6.

As an option, a normal direction of the third seating surface area 7a of the second lamella 7 is extending at a first angle β1 in relation to normal direction of the seat support portion 4 in the first position and at a second angle β2 in relation to the normal direction of the seat support portion 4 in the second position, wherein β1 ≥ β2. As an option, β1=90° and β2=0°, i.e. the second lamella 7 extends essentially vertically compared to the horizontal seat support portion 4 in the first position of the lamella 7 and wherein the second lamella extends essentially horizontally in the second position of the lamella 7.

As an option, the first and second lamellas 6, 7 extend in a length direction and width direction respectively, to form an elongated shape, wherein the normal directions are perpendicular to the length and width directions.

As an option, a normal direction of the first lamella 6 and the second lamella 7 respectively may be defined by the direction perpendicular to a direction between the two holes arranged at a respective end 6b, 6c and 7b, 7c of the lamellas 6, 7. As an option, the normal direction of the seat support portion 4 may be defined as a direction perpendicular to the plane defined by the frame structure 8 of the seat support portion 4.

A preferred embodiment of an adjustable child seat according to the invention has been described. However, the person skilled in the art realizes that this can be varied within the scope of the appended claims.

All the described options above can be freely combined as long as they remain within the scope of the appended claims and as long as the combination is not contradictory.

## Claims

1. An adjustable child seat (1) comprising a seat support portion (4) adjustable between at least a first position and a second position, the seat support portion (4) comprising a first seating surface (4a),
the adjustable child seat (1) further comprising at least a first lamella (6) comprising a second seating surface (6a), wherein the first lamella (6) is pivotally connected to the seat support portion (4), wherein the first lamella (6) is adapted to be in a first position whereby the seat support portion (4) is in a first height position, wherein the second seating surface (6a) is essentially non-parallel to the first seating surface (4a),
wherein the first lamella (6) is adapted to be pivoted to a second position wherein the seat support portion (4) is in a second height position, wherein the second seating surface (6a) is essentially parallel to the first seating surface (4a),
**characterized in that** the seat support portion (4) is adjustable between the first position, the second position and a third position,
the adjustable child seat (1) is further comprising a second lamella (7) comprising a third seating surface (7a), wherein the second lamella (7) is pivotally arranged to the first lamella (6), wherein the second lamella (7) is adapted to be in a first position whereby the seat support portion (4) is in the second position, and the third seating surface (7a) is essentially non-parallel to the first (4a) and second (6a) seating surfaces,
and wherein the second lamella (7) is adapted to be pivoted to a second position wherein the seat support portion (4) is in a third height position, wherein the third seating surface (7a) is essentially parallel to the first (4a) and second (6a) seat surfaces.

2. The adjustable child seat (1) according to claim 1, wherein the adjustable child seat (1) further comprises a base portion (3), wherein the second lamella (6, 7) is pivotally connected to the base portion (3).

3. The adjustable child seat (1) according to any of the previous claims 1-2, wherein the second (6a) and third seating area (7a) are essentially perpendicular to the first seating area (4a) when the first (6) and second lamella (7) is in a respective first position.

4. The adjustable child seat (1) according any of the previous claims 1-3, wherein a link device (13) is pivotally arranged between the seat support portion (4) and the first lamella (6) and/or the first lamella (6) and the second lamella (7) respectively to form the respective pivotal connection.

5. The adjustable child seat (1) according to any of the previous claims, wherein the adjustable child seat (1) comprises an adjustable first side support (5a) and an adjustable second side support (5b) connected on a respective side of the seat support portion (4), wherein the position of the first and second side support portions is based on the position of the seat support portion (4).

6. The adjustable child seat (1) according to claim 5, wherein the first and second side support (5a, 5b) are pivotally connected to the seat support portion (4), wherein a control bracket (10) is pivotally arranged in the seat support portion (4) and adapted to rest with a cam-surface (10d) of a respective side portion (10c) on a respective plate (5c) which is connected to the side support (5a, 5b), and
wherein a bottom portion (10a) of the control bracket (10) is adapted to slide against a rail (12) of the base portion, wherein adjusting the position of the seat support portion (4) causes pivoting of the control bracket (9), whereby the rotation of the cam surface (10d) causes a rotation of the first and second side support (5a, 5b).

7. The adjustable child seat (1) according to any of the previous claims, wherein the first lamella (6) has a tapered cross-section in a direction from the second seating surface (6a) towards its opposite side (6d).

8. The adjustable child seat (1) according to any of the previous claims, further comprising a base portion (3) wherein a support structure (9) is provided for supporting the seat support portion (4) at least in the first and second positions of the seat support portion (4), wherein the support structure (9) is pivotally arranged to the seat support portion (4) at a portion (9a) of the support structure (9), wherein the support structure (9) is slidably arranged to the base portion (3) at two respective portions (9b) of the support structure (9), wherein the support structure (9) pivots during movement of the seat support portion (4) between the first, second and third positions of said seat support portion (4).

9. The adjustable child seat (1) according to any of the previous claims 1-8, wherein the first position is a vertically uppermost height position and the third position is a vertically lowermost height position, and the second position is a vertically intermediate height position between the first and third positions.

10. The adjustable child seat (1) according to any of the previous claims 1-9, wherein the first position corresponds to a hindmost position of the seat support portion in a horizontal direction of the vehicle, and the third position corresponds to a foremost position of the seat support portion (4) and the second height position corresponds to an intermediate position between the first and third positions.

11. The adjustable child seat (1) according to any of the previous claims 1-10, wherein the first position corresponds to the smallest total seating surface area, and the third position corresponds to the largest total seating surface area and the second height position corresponds to an intermediate total seating surface area.

12. The adjustable child seat (1) according any of the previous claims 1-11, wherein the adjustable child seat (1) is adapted to be connected to a seat (2) of a vehicle using an isofix connection (14).

13. Vehicle comprising an adjustable child seat (1) according to any of previous claims 1-12.

## Patentansprüche

1. Verstellbarer Kindersitz (1), einen Sitzträgerabschnitt (4) umfassend, der zwischen mindestens einer ersten Stellung und einer zweiten Stellung verstellbar ist, wobei der Sitzträgerabschnitt (4) eine erste Sitzfläche (4a) umfasst,
wobei der verstellbare Kindersitz (1) ferner mindestens eine erste Lamelle (6) umfasst, die eine zweite Sitzfläche (6a) umfasst, wobei die erste Lamelle (6) schwenkbar mit dem Sitzträgerabschnitt (4) verbunden ist, wobei die erste Lamelle (6) dazu angepasst ist, in einer ersten Stellung zu sein, wobei der Sitzträgerabschnitt (4) in einer ersten Höhenstellung ist, wobei die zweite Sitzfläche (6a) im Wesentlichen nicht parallel zur ersten Sitzfläche (4a) ist,
wobei die erste Lamelle (6) dazu angepasst ist, in eine zweite Stellung geschwenkt zu werden, wobei der Sitzträgerabschnitt (4) in einer zweiten Höhenstellung ist, wobei die zweite Sitzfläche (6a) im Wesentlichen parallel zu der ersten Sitzfläche (4a) ist,
**dadurch gekennzeichnet, dass** der Sitzträgerabschnitt (4) zwischen der ersten Stellung, der zweiten Stellung und einer dritten Stellung verstellbar ist,
wobei der verstellbare Kindersitz (1) ferner eine zweite Lamelle (7) umfasst, die eine dritte Sitzfläche (7a) umfasst, wobei die zweite Lamelle (7) schwenkbar an der ersten Lamelle (6) angeordnet ist, wobei die zweite Lamelle (7) dazu angepasst ist, in einer ersten Stellung zu sein, wobei der Sitzträgerabschnitt (4) in der zweiten Stellung ist und die dritte Sitzfläche (7a) im Wesentlichen nicht parallel zu der ersten (4a) und zweiten (6a) Sitzfläche ist,
und wobei die zweite Lamelle (7) dazu angepasst ist, in eine zweite Stellung geschwenkt zu werden, wobei der Sitzträgerabschnitt (4) in einer dritten Höhenstellung ist, wobei die dritte Sitzfläche (7a) im Wesentlichen parallel zu der ersten (4a) und zweiten (6a) Sitzfläche ist.

2. Verstellbarer Kindersitz (1) nach Anspruch 1, wobei der verstellbare Kindersitz (1) ferner einen Basisabschnitt (3) umfasst, wobei die zweite Lamelle (6, 7) schwenkbar mit dem Basisabschnitt (3) verbunden ist.

3. Verstellbarer Kindersitz (1) nach einem der vorstehenden Ansprüche 1-2, wobei die zweite (6a) und dritte Sitzfläche (7a) im Wesentlichen senkrecht zu der ersten Sitzfläche (4a) sind, wenn die erste (6) und zweite Lamelle (7) in einer entsprechenden ersten Stellung sind.

4. Verstellbarer Kindersitz (1) nach einem der vorstehenden Ansprüche 1-3, wobei eine Verbindungsvorrichtung (13) schwenkbar zwischen dem Sitzträgerabschnitt (4) und der ersten Lamelle (6) beziehungsweise der ersten Lamelle (6) und der zweiten Lamelle (7) angeordnet ist, um die entsprechende Schwenkverbindung zu bilden.

5. Verstellbarer Kindersitz (1) nach einem der vorstehenden Ansprüche, wobei der verstellbare Kindersitz (1) einen verstellbaren ersten Seitenträger (5a) und einen verstellbaren zweiten Seitenträger (5b) umfasst, die auf einer entsprechenden Seite des Sitzträgerabschnitts (4) verbunden sind, wobei die Stellung des ersten und zweiten Seitenträgers auf der Stellung des Sitzträgerabschnitts (4) basiert.

6. Verstellbarer Kindersitz (1) nach Anspruch 5, wobei der erste und zweite Seitenträger (5a, 5b) schwenkbar mit dem Sitzträgerabschnitt (4) verbunden sind, wobei ein Steuerbügel (10) schwenkbar in dem Sitzträgerabschnitt (4) angeordnet und dazu angepasst ist, an einer Nockenfläche (10d) eines entsprechenden Seitenabschnitts (10c) auf einer entsprechenden Platte (5c) aufzuliegen, die mit dem Seitenträger (5a, 5b) verbunden ist, und wobei ein unterer Abschnitt (10a) des Steuerbügels (10) dazu angepasst ist, gegen eine Schiene (12) des Basisabschnitts zu gleiten, wobei das Verstellen der Stellung des Sitzträgerabschnitts (4) das Schwenken des Steuerbügels (9) bewirkt, wobei die Drehung der Nockenfläche (10d) eine Drehung des ersten und zweiten Seitenträgers (5a, 5b) bewirkt.

7. Verstellbarer Kindersitz (1) nach einem der vorstehenden Ansprüche, wobei die erste Lamelle (6) einen verjüngten Querschnitt in einer Richtung von der zweiten Sitzfläche (6a) zur gegenüberliegenden Seite (6d) aufweist.

8. Verstellbarer Kindersitz (1) nach einem der vorstehenden Ansprüche, ferner einen Basisabschnitt (3) umfassend, wobei eine Trägerstruktur (9) bereitgestellt ist, um den Sitzträgerabschnitt (4) mindestens in der ersten und zweiten Stellung des Sitzträgerabschnitts (4) zu tragen, wobei die Trägerstruktur (9) schwenkbar an dem Sitzträgerabschnitt (4) an einem Abschnitt (9a) der Trägerstruktur (9) angeordnet ist, wobei die Trägerstruktur (9) zum Basisabschnitt (3) an zwei entsprechenden Abschnitten (9b) der Trägerstruktur (9) verschiebbar angeordnet ist, wobei die Trägerstruktur (9) während der Bewegung des Sitzträgerabschnitts (4) zwischen der ersten, zweiten und dritten Stellung des Sitzträgerabschnitts (4) geschwenkt wird.

9. Verstellbarer Kindersitz (1) nach einem der vorstehenden Ansprüche 1-8, wobei die erste Stellung eine vertikal oberste Höhenstellung ist und die dritte Stellung eine vertikal unterste Höhenstellung ist und die zweite Stellung eine vertikal mittig zwischen der ersten und dritten Stellung liegende Höhenstellung ist.

10. Verstellbarer Kindersitz (1) nach einem der vorstehenden Ansprüche 1-9, wobei die erste Stellung einer hintersten Stellung des Sitzträgerabschnitts in Horizontalrichtung des Fahrzeugs entspricht und die dritte Stellung einer vordersten Stellung des Sitzträgerabschnitts (4) entspricht und die zweite Höhenstellung einer mittig zwischen der ersten und dritten Stellung liegenden Stellung entspricht.

11. Verstellbarer Kindersitz (1) nach einem der vorstehenden Ansprüche 1-10, wobei die erste Stellung der kleinsten Gesamtsitzfläche entspricht und die dritte Stellung der größten Gesamtsitzfläche entspricht und die zweite Höhenstellung einer dazwischenliegenden Gesamtsitzfläche entspricht.

12. Verstellbarer Kindersitz (1) nach einem der vorstehenden Ansprüche 1-11, wobei der verstellbare Kindersitz (1) dazu angepasst ist, unter Verwendung einer Isofix-Verbindung (14) mit einem Sitz (2) eines Fahrzeugs verbunden zu werden.

13. Fahrzeug, das einen verstellbaren Kindersitz (1) nach einem der vorstehenden Ansprüche 1-12 umfasst.

## Revendications

1. Siège d'enfant réglable (1) comprenant une partie de support de siège (4) réglable entre au moins une première position et une deuxième position, la partie de support de siège (4) comprenant une première surface d'assise (4a),
le siège d'enfant réglable (1) comprenant en outre au moins une première lamelle (6) comprenant une deuxième surface d'assise (6a), la première lamelle (6) étant reliée de manière pivotante à la partie de support de siège (4), la première lamelle (6) étant conçue pour être dans une première position, moyennant quoi la partie de support de siège (4) est dans une première position en hauteur, la deuxième surface d'assise (6a) étant essentiellement non parallèle à la première surface d'assise (4a),
la première lamelle (6) étant conçue pour pivoter vers une deuxième position, la partie de support de siège (4) étant dans une deuxième position en hauteur, la deuxième surface d'assise (6a) étant essentiellement parallèle à la première surface d'assise (4a),
**caractérisé en ce que** la partie de support de siège (4) est réglable entre la première position, la deuxième position et une troisième position,
le siège d'enfant réglable (1) comprend en outre une seconde lamelle (7) comprenant une troisième surface d'assise (7a), la seconde lamelle (7) étant disposée de manière pivotante par rapport à la première lamelle (6), la seconde lamelle (7) étant conçue pour être dans une première position, moyennant quoi la partie de support de siège (4) est dans la deuxième position, et la troisième surface d'assise (7a) est essentiellement non parallèle aux première (4a) et deuxième (6a) surfaces d'assise,
et la seconde lamelle (7) étant conçue pour pivoter vers une deuxième position dans laquelle la partie de support de siège (4) est dans une troisième position en hauteur, la troisième surface d'assise (7a) étant essentiellement parallèle aux première (4a) et deuxième (6a) surfaces d'assise.

2. Siège d'enfant réglable (1) selon la revendication 1, le siège d'enfant réglable (1) comprenant en outre une partie de base (3), la seconde lamelle (6, 7) étant reliée de manière pivotante à la partie de base (3).

3. Siège d'enfant réglable (1) selon la revendication 1 ou 2, les deuxième (6a) et troisième surfaces d'assise (7a) étant essentiellement perpendiculaires à la première surface d'assise (4a) lorsque la première (6) et la seconde (7) lamelles sont dans une première position respective.

4. Siège d'enfant réglable (1) selon l'une quelconque des revendications précédentes 1 à 3, un dispositif de liaison (13) étant disposé de manière pivotante entre la partie de support de siège (4) et la première lamelle (6) et/ou la première lamelle (6) et la seconde lamelle (7) respectivement pour former la liaison pivotante respective.

5. Siège d'enfant réglable (1) selon l'une quelconque des revendications précédentes, le siège d'enfant réglable (1) comprenant un premier support latéral réglable (5a) et un second support latéral réglable (5b) reliés sur un côté respectif de la partie de support de siège (4), la position des première et seconde parties de support latéral étant basée sur la position de la partie de support de siège (4).

6. Siège d'enfant réglable (1) selon la revendication 5, les premier et second supports latéraux (5a, 5b) étant reliés de manière pivotante à la partie de support de siège (4), un support de commande (10) étant disposé de manière pivotante dans la partie de support de siège (4) et conçu pour reposer avec une surface de came (10d) d'une partie latérale (10c) respective sur une plaque (5c) respective qui est reliée au support latéral (5a, 5b), et
une partie inférieure (10a) du support de commande (10) étant conçue pour coulisser contre un rail (12) de la partie de base, le réglage de la position de la partie de support de siège (4) entraînant le pivotement du support de commande (9), moyennant quoi la rotation de la surface de came (10d) entraîne une rotation des premier et second supports latéraux (5a, 5b).

7. Siège d'enfant réglable (1) selon l'une quelconque des revendications précédentes, la première lamelle (6) ayant une section transversale conique dans une direction de la deuxième surface d'assise (6a) vers son côté opposé (6d).

8. Siège d'enfant réglable (1) selon l'une quelconque des revendications précédentes, comprenant en outre une partie de base (3), une structure de support (9) étant fournie pour supporter la partie de support de siège (4) au moins dans les première et deuxième positions de la partie de support de siège (4), la structure de support (9) étant disposée de manière pivotante sur la partie de support de siège (4) au niveau d'une partie (9a) de la structure de support (9), la structure de support (9) étant disposée de manière coulissante sur la partie de base (3) au niveau de deux parties (9b) respectives de la structure de support (9), la structure de support (9) pivotant pendant le mouvement de la partie de support de siège (4) entre les première, deuxième et troisième positions de ladite partie de support de siège (4).

9. Siège d'enfant réglable (1) selon l'une quelconque des revendications 1 à 8, la première position étant une position en hauteur verticalement la plus haute et la troisième position étant une position en hauteur verticalement la plus basse, et la deuxième position étant une position en hauteur verticalement intermédiaire entre les première et troisième positions.

10. Siège d'enfant réglable (1) selon l'une quelconque des revendications 1 à 9, la première position correspondant à une position la plus en arrière de la partie de support de siège dans une direction horizontale du véhicule, et la troisième position correspondant à une position la plus en avant de la partie de support de siège (4) et la deuxième position en hauteur correspondant à une position intermédiaire entre les première et troisième positions.

11. Siège d'enfant réglable (1) selon l'une quelconque des revendications 1 à 10, la première position correspondant à la plus petite surface d'assise totale, et la troisième position correspondant à la plus grande surface d'assise totale et la deuxième position en hauteur correspondant à une surface d'assise totale intermédiaire.

12. Siège d'enfant réglable (1) selon l'une quelconque des revendications 1 à 11, le siège d'enfant réglable (1) étant conçu pour être relié à un siège (2) d'un véhicule à l'aide d'une liaison Isofix (14).

13. Véhicule comprenant un siège d'enfant réglable (1) selon l'une quelconque des revendications 1 à 12.
